# EUROPÄISCHE PATENTSCHRIFT

(11) **EP 2 002 087 B1**
(45) Veröffentlichungstag und Bekanntmachung des Hinweises auf die Patenterteilung: **28.07.2010**
(21) Anmeldenummer: 07722125.7
(22) Anmeldetag: 29.03.2007
(51) Int. Cl.: F01D 15/10, F02C 7/32

(54) **STRAHLTRIEBWERK MIT LÖSBAR ANGEORDNETER GENERATOREINHEIT**
JET ENGINE WITH DETACHABLY ARRANGED GENERATOR UNIT
MOTEUR À RÉACTION DOTÉ D'UNE UNITÉ DE GÉNÉRATRICE LIBÉRABLE

(30) Priorität: 04.04.2006 DE 102006015639
(43) Veröffentlichungstag der Anmeldung: 17.12.2008
(73) Patentinhaber: MTU Aero Engines GmbH, 80995 München (DE)
(72) Erfinder: GÖTZ, Werner, 85101 Lenting (DE); HERRMANN, Hubert, 85778 Haimhausen (DE)
(86) Internationale Anmeldenummer: PCT/DE2007/000567
(87) Internationale Veröffentlichungsnummer: WO 2007/112726

(56) Entgegenhaltungen:
- WO-A-95/02120
- WO-A-99/28599
- WO-A-2004/055339
- US-A- 3 859 785
- US-A1- 2004 025 509

## Beschreibung

Die vorliegende Erfindung betrifft ein Strahltriebwerk für ein Luftfahrzeug, mit wenigstens einer Turbinenwelle, auf welcher zumindest ein Verdichter und eine Turbine angeordnet sind, wobei sich ein Gehäuse insbesondere über die Mantelflächen des Strahltriebwerkes erstreckt, wobei weiterhin zumindest eine elektrische Generatoreinheit zur Stromerzeugung an wenigstens einer Turbinenwelle angeordnet ist.

Strahltriebwerke der hier interessierenden Art weisen Generatoreinheiten auf welche derart an zumindest einer der Turbinenwelle angeordnet sind, um durch die Ankopplung eine mechanische Leistung abzugreifen, welche in elektrische Leistung umgewandelt wird. Die elektrische Leistung wird dabei zum Betrieb verschiedener elektrischer Einrichtungen des Triebwerks und Luftfahrzeuges benötigt, wobei aktuelle Entwicklungen zeigen, dass die benötigte elektrische Leistung des Triebwerks und Luftfahrzeugs aufgrund einer zunehmenden Elektrifizierung diverser Aggregate weiter steigt. Diese diversen elektrischen Aggregate betreffen bisweilen derzeit noch mechanisch angetriebene Geräte wie z.B. Treibstoffpumpen oder Hydraulikpumpen, welche häufig über Geräteträger, sog. "Gearboxes", betrieben werden und zukünftig elektrisch angetrieben werden können/sollen. Auch die an Bord des Luftfahrzeugs benötigte elektrische Leistung steigt ständig.

Das gemäß der vorliegenden Erfindung betrachtete Strahltriebwerk betrifft insbesondere ein Fan-Triebwerk, welches als Zwei-Wellen-Triebwerk ausgebildet ist und der Fan ein Gebläse darstellt, welches die in das Triebwerk einströmende Luft vorverdichtet, sowie einen Mantelstrom um den heißen Abgasstrahl erzeugt. Ebenso sind Einwellensysteme bekannt, welche einen vorderseitig gelegenen mehrachsigen Verdichter besitzen und im hinteren Bereich einen eine- oder mehrachsige Turbine aufweisen.

Aus der US 2002/0122723 A1 ist ein gattungsgemäßes Strahltriebwerk bekannt, welches einen Generator aufweist, der im Hochdruckkompressor des Strahltriebwerks integriert ist. Das Strahltriebwerk weist Verdichterstufen auf, welche ummantelt sind, wobei außerhalb der Ummantelung ein elektrischer Generator angeordnet ist. Dieser besteht aus einem Stator, der eine elektrische Spule umfasst, sowie einen Rotor, welcher mit der Triebwerkswelle derart verbunden ist, dass dieser gleichermaßen eine Rotationsbewegung ausführt. Die Rotoranordnung führt eine Rotationsbewegung innerhalb des Stators aus und induziert eine elektrische Spannung in der Spule des Stators. Die Rotorelemente sind dabei außenseitig an den Schaufelelementen des Hochdruckkompressors angeordnet und erstrecken sich radial nach außen in den Stator des Generators.

Eine weitere Anordnung eines Generators innerhalb eines Strahltriebwerks ist aus der US 6,378,293 B1 bekannt. Hierbei weist ein Strahltriebwerk eine Mehrzahl von Wellen auf, welche jeweils die Kompressoren mit den zugeordneten Turbinen des Strahltriebwerks verbinden. Der Generator zur Erzeugung der elektrischen Leistung, welche elektromagnetische Lager speisen sowie eine Teilleistung zur Versorgung des Luftfahrzeugs liefern, ist dabei endseitig fern von den jeweiligen elektromagnetischen Lagerungen angeordnet und als separate Einheit ausgebildet. Der Antrieb des Generators wird dadurch geschaffen, dass der Generator mittels der Verbindung zur Niederdruckwelle des Strahltriebwerks durch diese angetrieben wird. Damit entsteht der Nachteil, dass der Wartungs- und Montageaufwand erhöht wird, was erhebliche Kosten verursacht. Die fluidischen Verbindungen müssen dabei in der Regel durch aufwendige Verbindungseinrichtungen zu Kabel- und Fluidleitungen hergestellt und bei einer Entnahme wieder gelöst werden.

Bei den gemäß des Standes der Technik bekannten Ausführungen der Anordnung der Generatoreinheit auf einer Welle des Strahltriebwerks tritt das Problem auf, dass der Einbauort der Generatoren eine erschwerte Zugänglichkeit aufweist, welche insbesondere bei einer Anordnung im Bereich des Hochdruckkompressors Probleme aufgrund der beschränkten Einbauverhältnisse hervorruft. Selbst bei einem endseitigen Anbau des Generators an die Niederdruckwelle sind die Montagemöglichkeiten sowie die Wartung und die Herstellung entsprechender fluidischer, mechanischer sowie elektrischer Verbindungen des Generators mit dem Strahltriebwerk bzw. mit dem Luftfahrzeug äußerst schwierig. Damit ist der Wartungsaufwand sowie der Montageaufwand erheblich erhöht, wobei sich insbesondere ein Austausch des Generators als sehr aufwendig erweist. Bei einer Montage bzw. Demontage des Generators muss dieser zunächst von der Niederdruckwelle mechanisch gelöst werden, wobei sowohl die elektrischen als auch die fluidischen Verbindungen in der Regel durch aufwendige Verbindungseinrichtungen wie Kabel und Druckleitungen gelöst werden müssen. Die mechanische Verbindung zwischen der Triebwerkswelle und dem Generator umfasst dabei in den meisten Fällen eine mechanische Wellenkupplung, welche ebenfalls eine aufwendige Installation bzw. Deinstallation erfordert.

Aus dem Dokument WO 99/28599 A ist es bekannt, einen elektrischen Generator an einer Dampf- oder Gasturbine anzuordnen. Dabei sind die Wellen von Turbine und Generator über Flansche (Pos. 43) direkt gekoppelt.

Es ist daher die Aufgabe der vorliegenden Erfindung, ein Strahltriebwerk mit einer Generatoreinheit zu schaffen, welche eine einfache Installation und Deinstallation der Generatoreinheit im bzw. aus dem Strahltriebwerk ermöglicht. Ebenfalls Ziel der Erfindung ist, den Wartungsaufwand zu minimieren.

Diese Aufgabe wird ausgehend von einem Strahltriebwerk mit einer Generatoreinheit gemäß dem Oberbegriff des Anspruchs 1 in Verbindung mit dessen kennzeichnenden Merkmalen gelöst. Vorteilhafte Weiterbildungen der Erfindung sind in den abhängigen Ansprüchen angegeben.

Die Erfindung schließt die technische Lehre ein, dass die elektrische Generatoreinheit eine Aufnahmeplatte sowie einen Generator aufweist, wobei die Generatoreinheit lösbar an der triebwerksseitigen Aufnahmeplatte montiert ist.

Die Erfindung geht dabei von dem Gedanken aus, dass die Generatoreinheit zur Stromerzeugung eine Schnittstelle hat, die zum einen die Generatoreinheit fest mit der triebwerksseitigen Aufnahmeplatte, die die andere Hälfte der Multifunktionskupplung bildet, verbindet und zum anderen die Generatorwelle über eine direkte oder indirekte (Zwischengetriebe) Verbindung mit der Turbinenwelle gekuppelt wird. Hiefür muß die triebwerksseitige Aufnahmeplatte mit einer Bohrung versehen sein, die größer ist als die Generatorwelle. Zur einfacheren Montage/Demontage der Generatoreinheit mit der triebwerksseitigen Aufnahmeplatte ist mindestens ein Zentrierstift notwendig, der zwischen den beiden zu verbindenden Einheiten eingreift, bevor jegliche anderen Elemente ineinander greifen.

Die Generatoreinheit ist an der Verdichterseite im vorderen Bereich und /oder an der Turbinenseite im hinteren Bereich des Strahltriebwerkes an der Turbinenwelle angeordnet. Beide Möglichkeiten können im Rahmen der vorliegenden Erfindung vorgesehen sein, wobei selbstverständlich auch an beiden Einbauorten jeweils ein Generator vorgesehen sein kann. In der vorderseitig angeordneten Verdichterseite kann die Generatoreinheit im sog. Nosecone und Eintrittsleitgitter eingebaut werden, wobei der Einbauort auf der hinteren Turbinenseite im sog. Exitcone und Austrittsleitstern vorgesehen werden kann. Entscheidend hierfür sind die jeweiligen Platz- und Einbauverhältnisse, wobei der Einbau auf der Verdichterseite den Vorteil bietet, dass diesseitig niedrigere Temperaturen herrschen.

Die mechanische Verbindung des Antriebs kann aber auch eine andere Turbinenwelle mit dem Generator verbinden, wobei diese zusätzlich eine Getriebestufe umfassen kann. Bei einem Einbau der elektrischen Generatoreinheit wird einmalig die triebwerksseitige Aufnahmeplatte im Eintritts- und/oder Austrittsleitstern des Strahltriebwerks fest installiert und die elektrischen, fluidischen und mechanischen Anschlüsse innerhalb einer Multifunktionskupplung hergestellt. Die generatorseitige Hälfte der Multifunktionskupplung beinhaltet spiegelbildlich dieselben Funktionsteile, damit im gekuppelten Zustand des eingebauten Generators die elektrischen sowie die fluidischen Ströme ungehindert fließen können. Die Kupplungshälfte am Generator kann entweder ein flanschartiger integraler Bestandteil desselben sein oder als separates Bauteil an diesen angebracht werden. Die Verbindungsanschlüsse beschreiben dabei die in den beiden Hälften der Multifunktionskupplung vorhandenen elektrischen Steckmodule und die selbstschließenden fluidischen Kupplungen, welche sich in den jeweiligen Hälften befinden, wobei rückseitig zur Kupplung die jeweiligen Leitungen herausgeführt sind.

Wird nun der Generator innerhalb der elektrischen Generatoreinheit deinstalliert bzw. gegen einen anderen Generator ausgetauscht, so muss lediglich der Generator von der Aufnahmeplatte gelöst werden, wobei die jeweiligen Verbindungsanschlüsse einfach ausgeführt sein können und keine aufwendige Installation bzw. Deinstallation erfordern. Somit kann eine erhebliche Erleichterung der Wartung geschaffen werden, da der Generator modulartig ausgeführt werden kann, und kann allein zur Wartung durch ein einfaches Deinstallieren von der generatorseitigen Aufnahmeplatte entnommen werden.

Um die elektrischen und fluidischen Leitungen zwischen der triebwerksseitigen Anschlussplatte und den nicht rotierenden Bereichen im Triebwerk zu ermöglichen, ist vorgesehen, dass die Aufnahmeplatte an einem Stator des Strahltreibwerkes angeordnet ist, wobei der Stator Hohlrippen umfasst, durch welche elektrische und /oder fluidische Leitungen hindurchführbar sind. Insbesondere die wärmeempfindlichen elektrischen Leitungen können auf vorteilhafte Weise in den Hohlräumen (falls notwendig mit zusätzlicher Wärmedämmung) der rippenartigen Ausbildungen der Statorelemente hindurchgeführt werden, wobei auch die mechanische Aufnahme der Anschlussplatte im Triebwerk durch mechanische Verbindungen erfolgen kann, welche innerhalb der Statorhohlräume verlegt sind.

Vorteilhafterweise sind die fluidischen Verbindungsanschlüsse selbstschließend ausgeführt, so dass diese beim Trennen das Austreten von Fluiden verhindern. Somit kann ein verlustfreier sowie sauberer Demontagevorgang sichergestellt werden, so dass insbesondere vor dem Hintergrund der begrenzten Raumverhältnisse ein Selbstverschluss der Anschlüsse durch entsprechend ausgebildete Kupplungselemente sichergestellt ist. Wenn die Verbindungsanschlüsse jeweils angekoppelt sind, ist ein freier Fluidfluss möglich, wobei bei einem Abkoppeln der Verbindungsanschlüsse sowohl seitens der Aufnahmeplatte als auch seitens des Generators eine ventilartige Sperrvorrichtung sowohl ein Austreten des jeweiligen Fluids als auch ein Eindringen von Verunreinigungen in die Rohrleitungen verhindert wird. Das Fluid kann dabei im Wesentlichen Kühlflüssigkeit umfassen, um den Generator an einen Kühlkreislauf anzuschließen. Die elektrischen Verbindungen können Steckverbindungen umfassen, so dass diese ebenfalls keine separate Trennung bzw. erneute Verbindung erfordern.

Eine weitere vorteilhafte Ausführungsform der vorliegenden Erfindung sieht vor, dass die Verbindungsanschlüsse Dichtungen aufweisen, welche aus O-Ringen gebildet sind. Damit ist eine Dichtungsvariante gegeben, wobei bei entsprechend ausgebildeten Steckverbindungsanschlüssen ebenfalls andere Dichtvorrichtungen Einsatz finden können.

Vorteilhafterweise weisen die Verbindungsanschlüsse trennbare Hochstromkontakte auf, um eine elektrische Verbindung zwischen dem Generator und dem Triebwerk bzw. dem Luftfahrzeug zu schaffen. Die Stromtragfähigkeit der Hochstromkontakte kann bis zu 500 A betragen, wobei sich die elektrischen Kontaktierungen insbesondere durch eine hohe Sicherheit auszeichnen.

Neben den elektrischen Leistungsanschlüssen können die Verbindungsanschlüsse Steuerkontakte zur Steuerung des Generators und /oder Bussystemkontakte zur Steuerung /Rückmeldung der Generatorparameter aufweisen. Damit umfassen die elektrischen Anschlüsse insgesamt auch Signalverbindungen, welche über getrennte Anschlusselemente zwischen der Anschlussplatte und dem Generator geführt werden.

Als eine besonders vorteilhafte Ausgestaltung, insbesondere zur Schaffung einer hohen Flexibilität, wird vorgeschlagen, dass die Montageschnittstelle der Aufnahmeplatte modular ausgebildet ist, um die Montage, von Generatoren verschiedener Bauart zu ermöglichen. Dabei sind die Generatoren ebenfalls als Generatormodule ausgebildet, welche jeweils eine gleiche Schnittstelle aufweisen, um an einer genormte Aufnahmeplatte angesetzt bzw. aufgenommen zu werden. Die verschiedenen Bauarten der Generatoren können dabei Synchron-, Asynchron- oder Reluktanzbauweisen umfassen, welche insbesondere bei Generatoren der hier interessierenden Anwendung geeignet sind.

Eine weitere, die Erfindung verbessernde Maßnahme sieht vor, dass der Antriebsschluss zwischen der Turbinenwelle und der Generatorwelle eine Vielzahnverbindung umfasst. Die Generatorwelle ist dabei als Hohlwelle ausgeführt und durchläuft eine Öffnung in den Anschlussplatten. Diese kann mit dem Wellenende der Turbinenwelle gekuppelt werden, wobei die Turbinenwelle im Stator der Turbine gelagert ist. Die axiale Sicherung der Ankupplung der beiden Wellen erfolgt dann über die Verbindung des Generatorflansches an die triebwerksseitige Anschlussplatte.

Die Wellenverbindung kann beispielsweise eine Vielzahnwelle in Bogenausführung umfassen, so dass sich sowohl axiale als auch geringe radiale Bewegungen der Turbinenwelle ermöglichen lassen. Damit ist ein einfaches Einfädeln bzw. Abziehen beim Ein- oder Ausbau der Generatoreinheit von der triebwerksseitigen Aufnahmeplatte ohne zusätzliche Hilfsmittel möglich.

Um eine vorteilhafte Aufnahme der gesamten elektrischen Generatoreinheit zu schaffen, wird vorgeschlagen, dass der Einbauraum des Generators aus einem zylinderförmigen Hohlraum gebildet ist, wobei dieser nur geringfügig größer ist als der Aussendruchmesser der Aufnahmeplatte. Damit wird ein topfartiger Hohlzylinder gebildet, welcher die Aufnahmeplatte aufweist, so dass der Generator innerhalb des Hohlzylinders angeordnet wird. Somit wird eine Art Gehäuse geschaffen, um den Generator insbesondere vor dem heißen Abgasstrahl des Strahltriebwerks zu schützen. Dafür kann vorgesehen sein, dass der den Einbauraum bildende zylinderförmige Hohlraum Hochtemperaturisolierungen aufweist, um die elektrische Generatoreinheit vor hohen Temperaturen im hinteren Luftauslassbereich zu schützen. Die vorgesehenen Hochtemperaturisolierungen ummanteln damit den Generator, wobei die verwendeten Materialien vorteilhafterweise nicht bzw. nur schwer entflammbar sind.

Weitere, die Erfindung verbessernde Maßnahmen sind in den Unteransprüchen angegeben oder werden nachfolgend gemeinsam mit der Beschreibung eines bevorzugten Ausführungsbeispiels der Erfindung anhand der Figuren näher dargestellt. Es zeigen:
- Fig. 1: eine Seitenansicht einer elektrischen Generatoreinheit mit einer Aufnahmeplatte mit einem auf dieser montierten Generator;
- Fig. 2: eine perspektivische Ansicht eines Strahltriebwerks mit einer elektrischen Generatoreinheit in einem montierten Zustand;
- Fig. 3: eine perspektivische Ansicht eines Strahltriebwerks mit einer elektrischen Generatoreinheit, wobei der Generator von der triebwerksseitigen Aufnahmeplatte getrennt dargestellt ist; und
- Fig. 4: eine schematische Ansicht der Generatoreinheit, in welcher diese an der triebwerksseitigen Aufnahmeplatte angeordnet ist, wobei die Verbindungsleitungen im Übergang durch die Multifunktionskupplung angedeutet sind; und
- Fig. 5: eine schematische Ansicht der Multifunktionskupplung in der Trennungsebene V-V aus Figur 4.

Bei den Figuren handelt es sich lediglich um eine beispielhafte technische Ausführung der vorliegenden Erfindung.

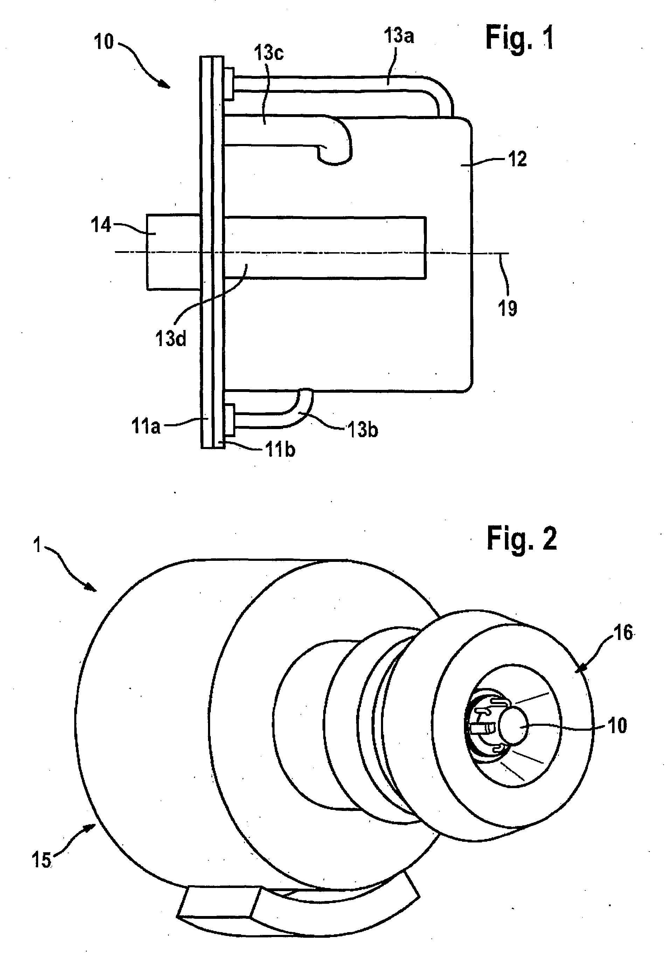

In Fig. 1 ist eine elektrische Generatoreinheit 10 (bestehend aus 11b und 12) in einer nicht geschnittenen Außenansicht gezeigt. Die schematische Darstellung umfasst linksseitig die triebwerksseitige Aufnahmeplatte 11a der Multifunktionskupplung 17 und rechtsseitig die generatorseitige Aufnahmeplatte 11b der Multifunktionskupplung 17. Die beiden Aufnahmeplatten sind kreisförmig ausgebildet und beinhalten die hier nicht sichtbaren entsprechenden elektrischen Steckermodule und die selbstschließenden fluidischen Kupplungshälften. Rechtsseitig der Multifunktionskupplung ist der Generator 12 angeordnet, welcher zylinderförmig ausgeführt ist und auf einer Mittelachse 19 konzentrisch in die generatorseitige Hälfte der Multifunktionskupplung 17 übergeht. Zwischen dem Generator 12 und der Aufnahmeplatte 11b sind Verbindungsleitungen 13a,13b,13c und 13d vorhanden, welche Speisestromleitungen, Signalleitungen für Sensoren, BUS-Leitungen, sowie Fluidikleitungen umfassen, welche beispielsweise eine Kühlflüssigkeit zur Kühlung des Generators 12 führen. Vorgenannte Leitungen werden über die Multifunktionskupplung miteinander gekoppelt, um dann auf der triebwerksseitigen Aufnahmeplatte 11 a rückseitig durch die Hohlrippen des Stators durch das Triebwerk nach außen geführt zu werden (nicht dargestellt). Durch eine zur Mittelachse 19 konzentrische Bohrung in der Multifunktionskupplung 17 hindurch erstreckt sich die Generatorwelle 14 zur Ankoppelung an die Triebwerkswelle.

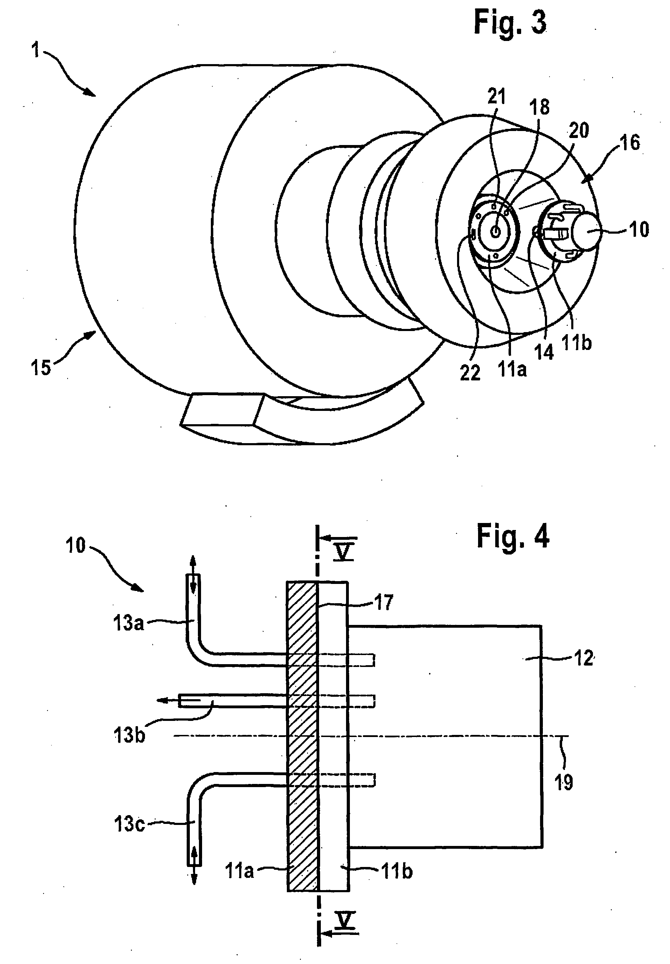

In Fig. 2 und in Fig. 3 ist ein Strahltriebwerk 1 gemäß der vorliegenden Erfindung perspektivisch dargestellt. Das Strahltriebwerk 1 umfasst einen vorderen Lufteinlassbereich 15 sowie einen hinteren Luftauslassbereich 16. Der Durchmesser des Gehäuses des Strahltriebwerks 1 im Bereich des vorderen Lufteinlassbereichs 15 ist größer ausgeführt, da hier der Fan integriert ist. Im hinteren Luftauslassbereich 16 weist das Triebwerk einen geringeren Durchmesser auf, wobei der hintere Luftauslassbereich 16 innenseitig den Einbauraum bietet, in dem die elektrische Generatoreinheit 10 gemäß dem vorliegenden Ausführungsbeispiel eingebaut ist. In Fig. 2 ist die elektrische Generatoreinheit 10 im montierten Zustand dargestellt, wohingegen die elektrische Generatoreinheit 10 in Fig. 3 perspektivisch vor der eigentlichen Einbaustelle innerhalb des hinteren Luftauslassbereichs 16 des Strahltriebwerks 1 gezeigt ist. Dadurch wird in Fig. 3 die triebwerksseitige Aufnahmeplatte 11a sichtbar, welche die Fluidkupplung 20 und 20a, den modularen Sensorleitungsstecker 21 sowie den modularen Speisestromstecker 22 umfassen. Weiterhin wird die Generatorwellewelle 14 sichtbar, welche gegenüber der Turbinenwelle 18 angeordnet ist und an diese mittels einer Kupplung oder einer sonstigen Wellenverbindung angeschlossen wird.

Figur 4 zeigt schematisch die Anbindung der Generatoreinheit 10 (12 und 11b) an die triebwerksseitig montierte Aufnahmeplatte 11a. In der Teilungsebene zwischen der schraffiert dargestellten Aufnahmeplatte 11a und der flanschförmigen Anschlussstelle 11b des Generators 12 sind die eigentlichen Verbindungselemente ausgebildet, über welche die Verbindungsleitungen 13a, 13b und 13c angekuppelt sind. Die Verbindungsleitungen betreffen sowohl elektrische Leitungen wie Signal-, Bus- und Speisestromleitungen als auch fluidische Leitungen zur Führung der Kühlflüssigkeit.

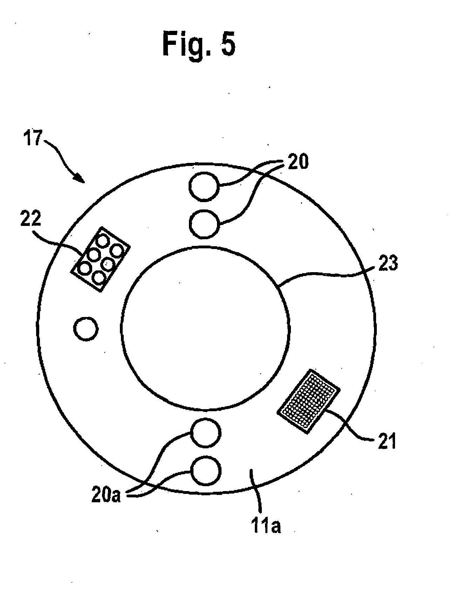

Eine Draufsicht auf eine Hälfte der Multifunktionskupplung 17 ist in der schematischen Ansicht in Figur 5 wiedergegeben. Diese umfasst die Fluidikkupplungen 20 und 20a, welche den Vor- und Rücklauf der Kühlflüssigkeit zwischen dem Triebwerk und dem Generator bilden. Weiterhin ist ein modularer Sensorleitungsstecker und BUS 21 zum signalverbindenden Anschluss des Generators und ein modularer Speisestromstecker 22 vorgesehen, welcher den Speisestrom zum Triebwerk bzw. Luftfahrzeug überträgt. Die Multifunktionskupplung ist im Flansch des Generators 11b und in der Anschlussplatte 11a jeweils spiegelbildlich ausgebildet, sodass die modularen Verbindungsstecker 21 und 22 und die Fluidikkupplungen 20 und 20a in den jeweiligen Gegenstecker bzw. in die Gegenkupplung einrasten.

## Patentansprüche

1. Strahltriebwerk (1) für ein Luftfahrzeug, mit wenigstens einer Turbinenwelle, auf welcher zumindest ein Verdichter und eine Turbine angeordnet sind, wobei sich ein Gehäuse insbesondere über die Mantelflächen des Strahltriebwerkes (1) erstreckt, und wobei weiterhin zumindest eine elektrische Generatoreinheit (10) zur Stromerzeugung an wenigstens einer Turbinenwelle angeordnet ist,
**dadurch gekennzeichnet, dass** die elektrische Generatoreinheit (10) eine statische Aufnahmeplatte (11b) sowie einen Generator (12) aufweist, wobei die Generatoreinheit (10) über die Aufnahmeplatte (11b) lösbar an einer an einem Stator des Strahltriebwerks (1) angeordneten Aufnahmeplatte (11a) montiert ist.

2. Strahltriebwerk (1) nach Anspruch 1,
**dadurch gekennzeichnet, dass** die Generatoreinheit (10) an der Verdichterseite im vorderen Bereich und /oder an der Turbinenseite im hinteren Bereich des Strahltriebwerkes (1) an der mindestens einen Turbinenwelle angeordnet ist

3. Strahltriebwerk (1) nach Anspruch 1 oder 2,
**dadurch gekennzeichnet, dass** der Stator des Strahltriebwerkes (1) Hohlrippen umfasst, durch welche elektrische und /oder fluidische Leitungen hindurchführbar sind.

4. Strahltriebwerk (1) nach einem der Ansprüche 1 bis 3,
**dadurch gekennzeichnet, dass** die Aufnahmeplatte (11a) Verbindungsanschlüsse (13) zur lösbaren Ankopplung der Generatoreinheit (10) aufweist, wobei diese zumindest eine mechanische Aufnahme, einen Antriebsanschluss sowie elektrische und /oder fluidische Anschlüsse umfasst.

5. Strahltriebwerk (1) nach Anspruch 4,
**dadurch gekennzeichnet, dass** zumindest die fluidischen Verbindungsanschlüsse (13) selbstschließend ausgeführt sind, um beim Trennen das Austreten von Fluiden, bzw. Verschmutzung der Leitungen zu verhindern.

6. Strahltriebwerk (1) nach einem der Ansprüche 4 bis 5,
**dadurch gekennzeichnet, dass** die Verbindungsanschlüsse (13) Dichtungen aufweisen, welche aus O-Ringen gebildet sind,

7. Strahltriebwerk (1) nach einem der Ansprüche 4 bis 6,
**dadurch gekennzeichnet, dass** die Verbindungsanschlüsse (13) trennbare Hochstromkontakte aufweisen, um eine elektrische Verbindung vom Generator (12) zum Triebwerk, bzw. Luftfahrzeug zu scharfen.

8. Strahltriebwerk (1) nach einem der Ansprüche 4 bis 7,
**dadurch gekennzeichnet, dass** die Verbindungsanschlüsse (13) Steuerkontakte zur Steuerung des Generators (12) und /oder Bussystemkontakte zur Steuerung /Rückmeldung der Generatorparameter aufweisen.

9. Strahltriebwerk (1) nach einem der vorgenannten Ansprüche,
**dadurch gekennzeichnet, dass** die Montageschnittstelle der Aufnahmeplatte (11a) modular/erweiterbar ausgebildet ist, um die Montage von Generatoren (12) verschiedener Bauart zu ermöglichen.

10. Strahltriebwerk (1) nach einem der vorgenannten Ansprüche,
**dadurch gekennzeichnet, dass** der Antriebsanschluss zwischen der triebwerksseitigen Antriebswelle (18) und der Generatorwelle (14) eine bogenförmig Vielzahnverbindung umfasst.

11. Strahltriebwerk (1) nach einem der vorgenannten Ansprüche,
**dadurch gekennzeichnet, dass** der Einbauraum des Generators (12) aus einem zylinderförmigen Hohlraum gebildet ist, wobei dieser nur geringfügig größer ist als der Außendurchmesser der Aufnahmeplatte (11a).

12. Strahltriebwerk (1) nach Anspruch 11,
**dadurch gekennzeichnet, dass** der den Einbauraum bildende zylinderförmige Hohlraum Hochtemperaturisolierungen aufweist, um die elektrische Generatoreinheit vor hohen Abgastemperaturen im hinteren Luftauslassbereich (16) zu schützen.

## Claims

1. A jet engine (1) for an aircraft, having at least one turbine shaft, on which at least one compressor and a turbine are arranged, wherein a housing extends in particular over the lateral surfaces of the jet engine (1), and wherein furthermore at least one electrical generator unit (10) for electric power generation is arranged on at least one turbine shaft,
**characterised in that** the electrical generator unit (10) has a static locating plate (11b) and also a generator (12), wherein the generator unit (10) is mounted by way of the locating plate (11b) in a detachable manner on a locating plate (11a) that is arranged on a stator of the jet engine (1).

2. A jet engine (1) according to claim 1,
**characterised in that** the generator unit (10) is arranged on the compressor side in the front region and/or on the turbine side in the rear region of the jet engine (1) on the at least one turbine shaft.

3. A jet engine (1) according to claim 1 or 2,
**characterised in that** the stator of the jet engine (1) includes hollow ribs through which electrical and/or fluidic lines can be guided.

4. A jet engine (1) according to one of claims 1 to 3,
**characterised in that** the locating plate (11a) has linking connections (13) for the detachable coupling of the generator unit (10), this including at least one mechanical locator, a drive connection and also electrical and/or fluidic connections.

5. A jet engine (1) according to claim 4,
**characterised in that** at least the fluidic linking connections (13) are constructed in a self-closing manner in order to prevent the emergence of fluids or contamination of the lines upon separation.

6. A jet engine (1) according to one of claims 4 to 5,
**characterised in that** the linking connections (13) have seals that are formed from O-rings.

7. A jet engine (1) according to one of claims 4 to 6,
**characterised in that** the linking connections (13) have separable high-current contacts in order to create an electrical connection from the generator (12) to the engine or aircraft.

8. A jet engine (1) according to one of claims 4 to 7,
**characterised in that** the linking connections (13) have control contacts for the control of the generator (12) and/or bus-system contacts for the control/feedback of the generator parameters.

9. A jet engine (1) according to one of the aforementioned claims,
**characterised in that** the assembly interface of the locating plate (11a) is formed in a modular/extendable manner in order to render possible the mounting of generators (12) of varying construction.

10. A jet engine (1) according to one of the aforementioned claims,
**characterised in that** the drive connection between the engine-side drive shaft (18) and the generator shaft (14) comprises an arc-shaped multipoint connection.

11. A jet engine (1) according to one of the aforementioned claims,
**characterised in that** the installation space of the generator (12) is formed from a cylindrical hollow space, wherein the latter is only slightly larger than the outside diameter of the locating plate (11a).

12. A jet engine (1) according to claim 11,
**characterised in that** the cylindrical hollow space forming the installation space has high-temperature insulations in order to protect the electrical generator unit from high exhaust-gas temperatures in the rear air-outlet region (16).

## Revendications

1. Moteur à réaction (1) pour aéronef, avec au moins un arbre de turbine sur lequel sont disposés au moins un compresseur et une turbine, dans lequel un carter s'étend en particulier sur la surface latérale du moteur à réaction (1), et dans lequel de plus, au moins une unité génératrice électrique (10) est disposée pour produire du courant au niveau d'au moins un arbre de turbine, **caractérisé en ce que** l'unité génératrice électrique (10) présente une plaque de réception statique (11b) ainsi qu'un générateur (12), l'unité génératrice (10) étant montée de façon amovible sur une plaque de réception (11a) disposée sur un stator du moteur à réaction (1) par l'intermédiaire de la plaque de réception (11b).

2. Moteur à réaction (1) selon la revendication 1, **caractérisé en ce que** l'unité génératrice (10) est disposée du côté compresseur dans la partie avant et/ou du côté turbine dans la partie arrière du moteur à réaction (1) sur ledit au moins un arbre de turbine.

3. Moteur à réaction (1) selon la revendication 1 ou 2, **caractérisé en ce que** le stator du moteur à réaction (1) comprend des nervures creuses par lesquelles on peut faire passer des lignes électriques et/ou conduites fluidiques.

4. Moteur à réaction (1) selon l'une quelconque des revendications 1 à 3, **caractérisé en ce que** la plaque de réception (11a) présente des raccords de connexion (13) pour un accouplement amovible de l'unité génératrice (10), laquelle comprend au moins un logement mécanique, un raccord d'entraînement ainsi que des raccords électriques et/ou fluidiques.

5. Moteur à réaction (1) selon la revendication 4, **caractérisé en ce qu'**au moins les raccords de connexion fluidiques (13) sont réalisés à fermeture automatique afin d'empêcher un échappement de fluides ou un encrassement des conduites en cas de séparation.

6. Moteur à réaction (1) selon l'une quelconque des revendications 4 à 5, **caractérisé en ce que** les raccords de connexion (13) présentent des joints d'étanchéité formés par des joints toriques.

7. Moteur à réaction (1) selon l'une quelconque des revendications 4 à 6, **caractérisé en ce que** les raccords de connexion (13) présentent des contacts pour courant fort séparables afin d'établir une connexion électrique entre le générateur (12) et le réacteur ou l'aéronef.

8. Moteur à réaction (1) selon l'une quelconque des revendications 4 à 7, **caractérisé en ce que** les raccords de connexion (13) présentent des contacts de commande pour commander le générateur (12) et/ou des contacts de système de bus pour commander/réinjecter les paramètres de générateur.

9. Moteur à réaction (1) selon l'une quelconque des revendications précédentes, **caractérisé en ce que** l'interface de montage de la plaque de réception (11a) est réalisée de façon modulaire/évolutive afin de permettre le montage de différents modèles de générateurs (12).

10. Moteur à réaction (1) selon l'une quelconque des revendications précédentes, **caractérisé en ce que** le raccord d'entraînement entre l'arbre d'entraînement (18) côté réacteur et l'arbre de générateur (14) comprend une connexion polygonale en forme d'arc.

11. Moteur à réaction (1) selon l'une quelconque des revendications précédentes, **caractérisé en ce que** l'espace de montage du générateur (12) est formé par une cavité cylindrique, celle-ci n'étant que légèrement plus grande que le diamètre extérieur de la plaque de réception (11a).

12. Moteur à réaction (1) selon la revendication 11, **caractérisé en ce que** la cavité cylindrique formant l'espace de montage présente des dispositifs d'isolation haute température afin de protéger l'unité génératrice électrique des hautes températures des gaz d'échappement dans la partie d'évacuation d'air arrière (16).
